# EUROPEAN PATENT SPECIFICATION

(11) **EP 2 636 937 B1**
(45) Date of publication and mention of the grant of the patent: **20.07.2016**
(21) Application number: 13305032.8
(22) Date of filing: 14.01.2013
(51) Int. Cl.: F16M 11/08, F16M 11/20, F16M 13/02, F16M 11/10

(54) **A large-sized display screen coordinating device in six degrees of freedom**
Vorrichtung zur Koordination eines großen Anzeigebildschirms in sechs Freiheitsgraden
Dispositif de coordination d'écran d'affichage de grande taille selon six degrés de liberté

(30) Priority: 09.03.2012 CN 201210062248
(43) Date of publication of application: 11.09.2013
(73) Proprietor: Dalian Wanda Group Co., Ltd., Xigang District Dalian (CN)
(72) Inventor: Lai, Jianyan, Chaoyang District Beijing (CN); Wang, Yuan, Chaoyang District Beijing (CN)
(74) Representative: Chauvin, Vincent

(56) References cited:
- EP-A2- 1 909 019
- DE-B- 1 179 070
- US-A1- 2003 235 320

## Description

### FIELD OF THE INVENTION

This invention relates generally to a display screen coordinating device, and particularly to a large-sized display screen coordinating device in six degrees of freedom.

### BACKGROUND OF THE INVENTION

So far, in the market, there has no video display which has a large sized screen and six freedoms, let along a video display with three display screens operated coordinately, simultaneously and highly precisely to carry out various multi-difficulty combined actions. The highest load-bearing capacity of a display screen which can effectuate highly precise control in six degrees of freedom is 15,000 N/m2 The existing display screens that can effectuate motion in six degree of freedom, however, have a lower load-bearing capacity and therefore the effective displaying area can only provide a maximum effective displaying area of less than 20m2. In such conditions, the displaying effect is unsatisfactory in places, such as a grand theater, where the audience are distant from the screen. In addition, the previous art cannot provide movement for a large-sized LED display screen in six degrees of freedom, let along the coordinated motion of multiple screens in a combined display screen.

Document US2003/0235320 discloses a display screen coordinating device that comprises a base, a single display screen and a single mechanical arm that is able to position the screen in several positions relative to the base. This mechanical arm includes four rigid arm segments that are pivotally engaged with respect to each other with three bi-pivotable adjustable joint assemblies. The two arm segments that are positioned at the ends of the mechanical arm are affixed to the base and to the display screen.

Document EP1909019 discloses an extension arm assembly that includes a first endcap that connects at one end to a base member and at the other end to a first arm member by a first pivot. The first arm member is connected to a middle cap by a second pivot. A second arm member connects to the other side of the middle cap by a third pivot. The second arm member also connects to a second endcap by a fourth pivot. A tilting device is used to couple a display screen to the second endcap. The tilting device provides additional flexibility to position the display screen as desired. This tilting device provides 3 degrees of freedom in rotation.

### SUMMARY OF THE INVENTION

The purpose of the invention is to overcome the shortcomings of the previous art through providing a large-sized display screen coordinating device in six degrees of freedom, which can make a large-sized display screen to move in six degrees of freedom, and can even make a combined large-sized display screen consisting of a plurality of screens to move coordinately.

In order to fulfill the purpose described above, the large-sized display screen coordinating device in six degrees of freedom is characterized in that it comprises three identical mechanical arms, which are disposed equidistantly and parallelly to one another. Each mechanical arm includes: (1) a vertically provided support column, at the top and bottom ends of which a column pivoting kinematic pair that can pivot about axis Y is provided respectively ; (2) a tension arm, one end of which is provided on a side face of the support column via a tension arm pivoting kinematic pair; (3) a first pivoted arm, which is fitted and connected to the free end of the tension arm via a first pivoting kinematic pair; (4) a second pivoted arm, which is fitted and connected to the free end of the first pivoted arm via a second pivoting kinematic pair; and (5) a third pivoted arm, which is fitted and connected to the free end of the second pivoted arm via a third pivoting kinematic pair. Moreover, the third pivoted arm is fitted and connected to a display screen via a display screen pivoting kinematic pair. Furthermore, the tension arm pivoting kinematic pair, the first pivoting kinematic pair and the second pivoting kinematic pair are provided to be parallel to one another; and the second pivoting kinematic pair, the third pivoting kinematic pair and the display screen pivoting kinematic pair is provided to be perpendicular to one another.

Preferably, said tension arm pivoting kinematic pair, said first pivoting kinematic pair and said second pivoting kinematic pair can all pivot about an axis parallel to axis Z; said third pivoting kinematic pair can pivot about an axis parallel to axis Y; and said display screen pivoting kinematic pair can pivot about an axis parallel to axis X.

Preferably, a counterweight is provided on said first pivoted arm.

Preferably, a counterweight is provided at the forward end of said tension arm.

Preferably, distance sensors are provided on the periphery of the display screen.

Preferably, mechanical anti-collision means are provided on the periphery of the display screen.

The benefit of the invention lies in that the use of the large-sized display screen coordinating device in six degrees of freedom allows a large-sized LED display screen to move in six degrees of freedom, and further, allows a combined large-sized display screen consisting of a plurality of screens to move coordinately. In addition, the counterweight provided on the first pivoted arm can reduce the required operation power to save energy; the counterweight on the forward end of the tension arm can reduce the required cylinder power and tensile force; and the servo converter used for driving can improve jointing precision of plural screens to enhance displaying effect.

### BRIEF DESCRIPTION OF DRAWINGS

Fig. 1 is a front elevation view of a large-sized display screen coordinating device in six degrees of freedom according to the invention;
Fig. 2 is a top view of the large-sized display screen coordinating device in six degrees of freedom shown in Fig. 1; and
Fig. 3 is a left side elevation view of the large-sized display screen coordinating device shown in Fig. 1 and illustrates schematic diagrams of the device in six degrees of freedom in its three different positions.

### DETAILED DESCRIPTION OF THE INVENTION

The present invention is now described in detail by referring to a preferred embodiment and the accompanying drawings.

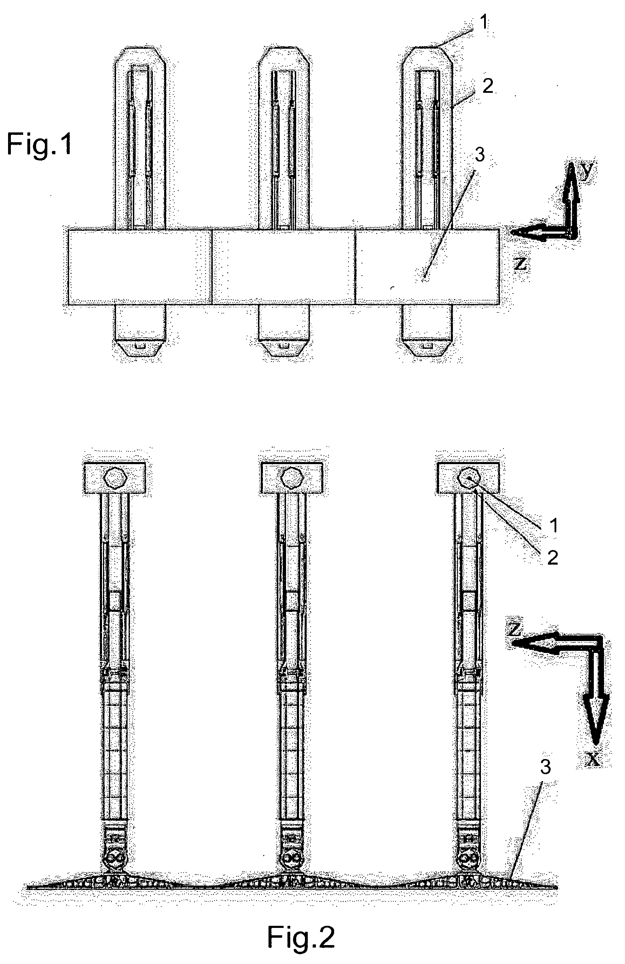

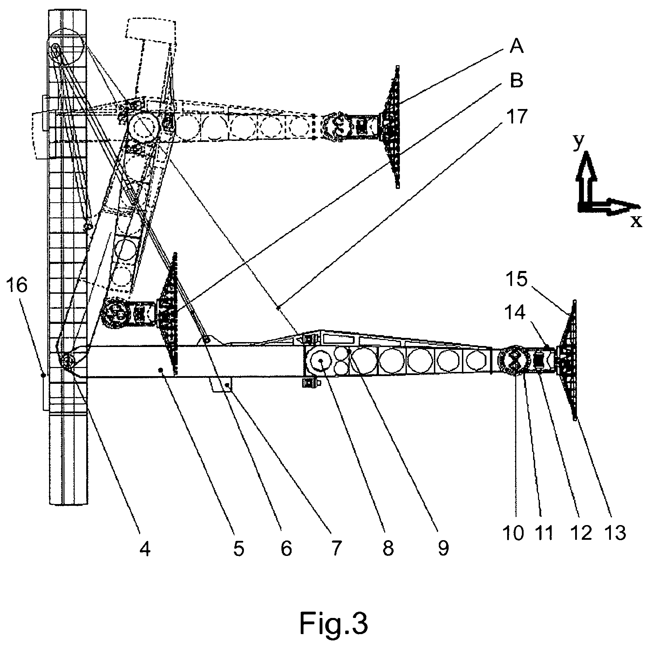

A large-sized display screen coordinating device in six degrees of freedom, as shown in Figs. 1 to 3 (Fig. 3A and B indicate positions of two mechanical arms when the displays are at two different points in space), comprises three mechanical arms which are disposed equidistantly and parallelly to one another. The three mechanical arms have identical configuration, with each mechanical arm comprising a support column 2, a tension arm 5, a first pivoted arm 9, a second pivoted arm 11 and a third pivoted arm 14.

The detailed description is as follows:
Said support column 2 is vertically erected, the top and bottom end surfaces of which is provided respectively with a column pivoting kinematic pair 1 when said column pivoting kinematic pair 1 is driven by an electric speed-reducer, the vertical support column 2 is pivoted horizontally around a stage. In this condition, display screen 3 can be horizontally pivoted around the vertical column 2 in a large extent and can move left and right as well.

One end of said tension arm 5 is provided on a side face of said vertical column 2 via a tension arm pivoting kinematic pair 4; said first pivoted arm 9 is fitted and connected to the free end of said tension arm 5 via a first pivoting kinematic pair 8; both said tension arm pivoting kinematic pair 4 and said first pivoting kinematic pair 8 can be pivoted about an axis parallel to axis Z. At a place where the tension arm 5 is nearer to the first pivoted arm 9, a tension hydraulic cylinder or other tension means is used to enable the tension arm 5 to pivot about the tension arm pivoting kinematic pair 4, which is connected with the vertical column 2, on a plane which passes through the axis of the vertical column 2 and the axis of the tension arm 5 and is perpendicular to the horizontal plane, therefore, the display screen 3 can pivot in a vertical plane, and move up and down as well as forward and backward in a vertical plane. Moreover, the first pivoted arm 9 is provided with a counterweight 7, that is, the first pivoted arm 9 is composed of a support arm and an arm as counterweight. Furthermore, the first pivoting kinematic pair 8 is driven by an electric speed-reducer or a hydraulic motor, and with a counterweight device 7 such as a counterweight arm and a counterweight piece added to reduce the required speed-reducer toque and power of the speed-reducer, therefore, to save energy.

Said second pivoted arm 11 is fitted and connected to the free end of the first pivoted arm 9 via a second pivoting kinematic pair 10; said third pivoted arm 14 is fitted and connected to the free end of the second pivoted arm 11 via a third pivoting kinematic pair 12; and said third pivoted arm 14 is fitted and connected to the display screen 3 via a display screen pivoting kinematic pair 13. Said second pivoting kinematic pair 10, the tension arm pivoting kinematic pair 4 and the first pivoting kinematic pair 8 are provided to be parallel to one another, in addition, the second pivoting kinematic pair 10, the third pivoting kinematic pair 12 and the display screen pivoting kinematic pair 13 are provided to be perpendicular to one another. Preferably, both said first pivoting kinematic pair 8 and the second pivoting kinematic pair 10 can pivot about an axis parallel to axis Z; said third pivoting kinematic pair 12 can pivot about an axis parallel to axis Y; said display screen pivoting kinematic pair 13 can pivot about an axis parallel to axis X. Thus, the first pivoted arm 9 can also pivot in the vertical plane, and, the first pivoted arm 9 cooperates with the tension arm 5 to make the display screen 3 to move in three translational degrees of freedom to a large extent. Furthermore, because the second pivoting kinematic pair 10, the third pivoting kinematic pair 12 and the display screen pivoting kinematic pair 13 are perpendicular to one another, it is possible to make the display screen 3 to pivot in three degrees of freedom. In this way, each mechanical arm can be moved in the six degrees of freedom, thus, it is possible to produce the display screen coordinating device in six degrees of freedom through computer and relevant synchronous control technology.

Moreover, lightweight LED display screens are used for displaying, and each screen has an area of 11.28m X 6.74m. The display screen 3 is supported by lightweight steel structure 15, and the total weight of the display screen 3 and the steel structure 15 is controlled below 6,500kg. Said display screen pivoting kinematic pair 13 is driven by an electric motor, and an internal ring gear rotary bearing device is provided, with the electric motor being a servomotor and the frequency converter being a servo converter. Said third pivoting kinematic pair 12 is driven by an electric motor, and an internal ring gear rotary bearing device is provided, with the motor being a servomotor, two motor speed-reducers being used in order to disperse driving force of the gear mechanism, and the frequency converter being a servo converter. Said second pivoting kinematic pair 10 is driven by an electric motor, and an internal ring gear rotary bearing device is provided, with the motor being a servomotor, two servomotor speed-reducers being used in order to disperse driving force of the gear mechanism, and the frequency converter being a servo converter.

In order to reinforce rigidity of the first pivoted arm 9, the first pivoted arm 9 is manufactured to be a big-section box-beam structure. In order to reduce weight, among others, the section is gradually reduced from the root to the tip, the box beam is formed by thin iron plates, and the side wall plates are perforated. Said first pivoting kinematic pair 8 is driven by servo electric motors, and an internal ring gear rotary bearing device is provided, with the motors being servomotors, four servomotor speed-reducers being used in order to disperse driving force of the gear mechanism, and the frequency converter being a servo converter. Said tension arm 5 is also manufactured to be a box-beam structure, and the upper and lower wall plates of the tension arm 5 are centrally slotted in direction Y in order to provide a space for the counterweight arm of the first pivoted arm 9, therefore, the counterweight arm of the first pivoted arm 9 may pass through the space. The tension arm 5 can be tensioned by two piston-cylinder devices, and in order to reduce the required cylinder power and tensile force, a tensile force application point for the counterweight is provided on the front end of the tension arm 5. As indicated by the tension arm counterweight 16 and its wire rope 17 in Fig. 3 the wire rope 17 is led around a fixed pulley and then connected to the tension arm counterweight 16. The tension arm counterweight 16 further plays a role to provide safety protection, that is, when the mechanical arm is folded in non-operation state, a fix pin is added at the counterweight end to reduce tensile force of the cylinder during non-operation state. Even if the cylinder is out of order, the mechanical arm will not drop down. At the bottom end of the vertical columns 2, a rotary bearing device with large load-bearing capacity is provided, and an external ring gear rotary bearing device is provided, with the motors being servomotors, two servomotor speed-reducers being used to disperse driving force of the gear mechanism, and the frequency converter being a servo converter. At the top end of the support column 2, there should be a column pivoting kinematic pair 1 which is coaxial with the bottom rotary bearing device. Considering that the distance between the two column pivoting kinematic pairs 1 is quite far, in order to avoid unsmooth pivoting, which may be caused by errors in manufacturing the steel structure, the column pivoting kinematic pairs 1 at an upper portion is modified to be a jogging knuckle bearing, and therefore, the freedom in direction Y is released.

In order to ensure precise coordinating action of the three mechanical arms with identical configuration, a high-performance central controller is incorporated; a high-precision encoder is used to detect speed of the respective kinematic pairs, forming a closed-loop control of speed and position with the controller; and a high-precision proportional valve is used as the solenoid valve of the cylinder. The control system cooperates with the mechanical system to enable it quickly operate according to a preset program, and thus, to attain a good displaying effect.

In order to protect the coordinating device during operating from contingency, distance sensors are provided around the periphery of each display screen 3, and the sensors will send alarm signals if the display screens 3 approach them. In addition, mechanical anti-collision means are provided on the edges of the display screens 3 to ensure safe operation of the screens.

The preferred embodiment of the invention described above is only an example but not intended to limit the scope of the application of this invention. Any changes or modifications that are within the scope of this invention and have the same effect as intended shall fall into the scope of this invention defined in the claims.

## Claims

1. A large-sized display screen coordinating device in six degrees of freedom, wherein it comprises three completely identical mechanical arms, which are disposed equidistantly and parallelly to one another, each mechanical arm includes:
a vertically provided support column (2), at the top and bottom ends of which a column pivoting kinematic pair (1) that can pivot about an axis Y is provided respectively;
a tension arm (5), one end of which is provided on a side face of the support column (2) via a tension arm pivoting kinematic pair (4);
a first pivoted arm (9), which is fitted and connected to the free end of the tension arm (5) via a first pivoting kinematic pair (8);
a second pivoted arm (11), which is fitted and connected to the free end of the first pivoted arm (9) via a second pivoting kinematic pair (10); and
a third pivoted arm (14), which is fitted and connected to the free end of the second pivoted arm via a third pivoting kinematic pair (12); and
said third pivoted arm (14) is fitted and connected to a display screen (3) via a display screen pivoting kinematic pair (13);
said tension arm pivoting kinematic pair (4), said first pivoting kinematic pair (8) and said second pivoting kinematic pair (10) are provided to be parallel to one another; and said second pivoting kinematic pair (10), said third pivoting kinematic pair (12) and said display screen pivoting kinematic pair (13) are provided to be perpendicular to one another.

2. The large-sized display screen coordinating device in six degrees of freedom defined in Claim 1, **characterized in that** said tension arm pivoting kinematic pair (4), said first pivoting kinematic pair (8) and said second pivoting kinematic pair (10) can pivot about an axis parallel to axis Z; said third pivoting kinematic pair (12) can pivot about an axis parallel to axis Y; and said display screen pivoting kinematic pair (13) can pivot about an axis parallel to axis X.

3. The large-sized display screen coordinating device in six degrees of freedom defined in Claim 1 or 2, **characterized in that** said first pivoted arm (9) is provided with a counterweight (7).

4. The large-sized display screen coordinating device in six degrees of freedom defined in Claim 1 or 2, **characterized in that** the front end of said tension arm (5) is provided with a counterweight (16).

5. The large-sized display screen coordinating device in six degrees of freedom defined in Claim 1 or 2, **characterized in that** around the periphery of said display screen (3) are provided with distance sensors.

6. The large-sized display screen coordinating device in six degrees of freedom defined in Claim 1 or 2, **characterized in that** on the periphery of said display screen (3) are provided with mechanical anti-collision means.

## Patentansprüche

1. Großformatige Anordnungsvorrichtung für Bildschirme mit sechs Freiheitsgraden, wobei diese Vorrichtung drei vollstandig identische mechanische Arme umfasst, die in gleichen Abständen parallel zueinander angeordnet sind, wobei jeder einzelne mechanische Arm umfasst:
eine vertikal angeordnete Tragsäule (2), an deren oberem und unterem Ende jeweils ein kinematisches Paar (1) zum Schwenken der Säule vorgesehen ist, das drehbar um die Y-Achse gelagert ist;
einen Zugarm (5), dessen eines Ende über ein kinematisches Paar (4) zum Schwenken des Zugarms an einer Seite der Tragsäule (2) angebracht ist;
einen ersten Schwenkarm (9), der über ein erstes kinematisches Paar (8) zur Ausführung einer Schwenkbewegung am freien Ende des Zugarms (5) montiert und angeschlossen ist;
einen zweiten Schwenkarm (11), der über ein zweites kinematisches Paar (10) zur Ausführung einer Schwenkbewegung am freien Ende des ersten Schwenkarms (9) montiert und angeschlossen ist; und
einen dritten Schwenkarm (14), der über ein drittes kinematisches Paar (12) zur Ausführung einer Schwenkbewegung am freien Ende des zweiten Schwenkarms montiert und angeschlossen ist; und
wobei der genannte dritte Schwenkarm (14) über ein kinematisches Paar (13) zur Ausführung einer Schwenkbewegung des Bildschirms an einem Bildschirm (3) montiert und angeschlossen ist;
wobei das genannte kinematische Paar (4) zum Schwenken des Zugarms, das genannte erste kinematische Paar (8) zur Ausführung einer Schwenkbewegung und das genannte zweite kinematische Paar (10) zur Ausführung einer Schwenkbewegung so angeordnet sind, dass sie parallel zueinander stehen; wobei das genannte zweite kinematische Paar (10) zur Ausführung einer Schwenkbewegung, das genannte dritte kinematische Paar (12) zur Ausführung einer Schwenkbewegung und das genannte kinematische Paar (13) zum Schwenken des Bildschirms so angeordnet sind, dass sie rechtwinklig zueinander stehen.

2. Großformatige Anordnungsvorrichtung für Bildschirme mit sechs Freiheitsgraden nach Anspruch 1, **dadurch gekennzeichnet, dass** das genannte kinematische Paar (4) zum Schwenken des Zugarms, das genannte erste kinematische Paar (8) zur Ausführung einer Schwenkbewegung und das genannte zweite kinematische Paar (10) zur Ausführung einer Schwenkbewegung eine Schwenkbewegung um eine zur z-Achse parallel verlaufende Achse ermöglichen; wobei das genannte dritte kinematische Paar (12) eine Schwenkbewegung um eine zur y-Achse parallel verlaufende Achse ermöglicht; und wobei das genannte kinematische Paar (13) zum Schwenken des Bildschirms eine Schwenkbewegung um eine zur x-Achse parallel verlaufende Achse ermöglicht.

3. Großformatige Anordnungsvorrichtung für Bildschirme mit sechs Freiheitsgraden nach den Ansprüchen 1 oder 2, **dadurch gekennzeichnet, dass** der genannte erste Schwenkarm (9) mit einem Gegengewicht (7) versehen ist.

4. Großformatige Anordnungsvorrichtung für Bildschirme mit sechs Freiheitsgraden nach den Ansprüchen 1 oder 2, **dadurch gekennzeichnet, dass** das vordere Ende des genannten Zugarms (5) mit einem Gegengewicht (16) versehen ist.

5. Großformatige Anordnungsvorrichtung für Bildschirme mit sechs Freiheitsgraden nach den Ansprüchen 1 oder 2, **dadurch gekennzeichnet, dass** der genannte Bildschirm (3) umlaufend mit Abstandssensoren versehen ist.

6. Großformatige Anordnungsvorrichtung für Bildschirme mit sechs Freiheitsgraden nach den Ansprüchen 1 oder 2, **dadurch gekennzeichnet, dass** der genannte Bildschirm (3) umlaufend mit mechanischen Kollisionsschutzmitteln versehen ist.

## Revendications

1. Dispositif de coordination d'écran d'affichage de grande taille selon six degrés de liberté, comprenant trois bras mécaniques complètement identiques, qui sont équidistants et parallèles entre eux, chaque bras mécanique comprenant :
une colonne support (2) disposée verticalement, aux extrémités supérieure et inférieure de laquelle est prévue respectivement une paire cinématique de pivotement de colonne (1) apte à pivoter autour d'un axe Y;
un bras de traction (5), dont une extrémité est prévue sur une face latérale de la colonne support (2) via une paire cinématique de pivotement (4) du bras de traction;
un premier bras articulé (9) qui est monté et relié à l'extrémité libre du bras de traction (5) via une première paire cinématique de pivotement (8) ;
un second bras articulé (11) qui est monté et relié à l'extrémité libre du premier bras articulé (9) via une seconde paire cinématique de pivotement (10) ; et
un troisième bras articulé (14) qui est monté et relié à l'extrémité libre du second bras articulé via une troisième paire cinématique de pivotement (12) ; et
ledit troisième bras articulé (14) est monté et relié à un écran d'affichage (3) via une paire cinématique de pivotement (13) de l'écran d'affichage;
ladite paire cinématique de pivotement (4) du bras de traction, ladite première paire cinématique de pivotement (8) et ladite seconde paire cinématique de pivotement (10) sont disposées de manière parallèle entre elles ; et ladite seconde paire cinématique de pivotement (10), ladite troisième paire cinématique de pivotement (12) et ladite paire cinématique de pivotement (13) de l'écran d'affichage sont disposées de manière perpendiculaire entre elles.

2. Dispositif de coordination d'écran d'affichage de grande taille selon six degrés de liberté selon la revendication 1, **caractérisé en ce que** ladite paire cinématique de pivotement (4) du bras de traction, ladite première paire cinématique de pivotement (8) et ladite seconde paire cinématique de pivotement (10) peuvent pivoter autour d'un axe parallèle à l'axe Z ; ladite troisième paire cinématique de pivotement (12) peut pivoter autour d'un axe parallèle à l'axe Y ; et ladite paire cinématique de pivotement (13) de l'écran d'affichage peut pivoter autour d'un axe parallèle à l'axe X.

3. Dispositif de coordination d'écran d'affichage de grande taille selon six degrés de liberté selon la revendication 1 ou 2, **caractérisé en ce que** ledit premier bras articulé (9) est pourvu d'un contrepoids (7).

4. Dispositif de coordination d'écran d'affichage de grande taille selon six degrés de liberté selon la revendication 1 ou 2, **caractérisé en ce que** l'extrémité avant dudit bras de traction (5) est pourvue d'un contrepoids (16).

5. Dispositif de coordination d'écran d'affichage de grande taille selon six degrés de liberté selon la revendication 1 ou 2, **caractérisé en ce que** des capteurs de distance sont prévus autour de la périphérie dudit écran d'affichage (3).

6. Dispositif de coordination d'écran d'affichage de grande taille selon six degrés de liberté selon la revendication 1 ou 2, **caractérisé en ce que** des moyens mécaniques anti-collision sont prévus sur la périphérie dudit écran d'affichage (3).
